# EUROPEAN PATENT APPLICATION

(11) **EP 4 783 049 A1**
(43) Date of publication of application: **29.07.2026**
(21) Application number: 25819052.9
(22) Date of filing: 29.05.2025
(51) Int. Cl.: G06F 21/60

(54) **DATA PROTECTION METHOD AND APPARATUS, AND ELECTRONIC DEVICE**

(30) Priority: 07.06.2024 CN 202410740883
(71) Applicant: HUAWEI TECHNOLOGIES CO., LTD., Shenzhen 518129 (CN)
(72) Inventor: HU, Huifeng, Shenzhen, Guangdong 518129 (CN)
(74) Representative: Goddar, Heinz J.
(86) International application number: PCT/CN2025/098050
(87) International publication number: WO 2025/251999

(57) **Abstract**

This application provides a data protection method and apparatus, and an electronic device. The method includes: modifying an encryption manner of first data in response to a first trigger event, where the encryption manner includes a first encryption manner and a second encryption manner, an encryption key in the first encryption manner continues to exist after the electronic device locks a screen, and an encryption key in the second encryption manner is released after the electronic device locks the screen. The data protection method and apparatus, and the electronic device that are provided in this application ensure normal running of an appropriate service while protecting data security.

## Description

This application claims priority to Chinese Patent Application No. 202410740883.3, filed with the China National Intellectual Property Administration on June 7, 2024 and entitled "DATA PROTECTION METHOD AND APPARATUS, AND ELECTRONIC DEVICE", which is incorporated herein by reference in its entirety.

### TECHNICAL FIELD

This application relates to electronic device technologies, and more specifically, to a data protection method and apparatus, and an electronic device.

### BACKGROUND

With development of science and technology, electronic devices become an integral part of people's production and life. Most data like files, resources, account information, or passwords carried on the electronic devices relates to user privacy. Therefore, when providing various services for users, the electronic devices also need to consider protection of files related to user privacy.

Currently, an electronic device usually sets a same encryption manner for files in a same directory at a granularity of directories of applications. As a result, file protection cannot be performed based on specific files or actual service scenarios, and normal service running may be affected.

Therefore, how to ensure normal running of an appropriate service while protecting data security is an urgent problem to be resolved currently.

### SUMMARY

This application provides a data protection method and apparatus, and an electronic device. This method ensures normal running of a service while protecting data security.

According to a first aspect, a data protection method is provided, where the method is applied to an electronic device, and the method includes: modifying an encryption manner of first data in response to a first trigger event, where the encryption manner includes a first encryption manner and a second encryption manner, an encryption key in the first encryption manner continues to exist after the electronic device locks a screen, and an encryption key in the second encryption manner is released after the electronic device locks the screen.

It should be noted that the first data is data carried on the electronic device, for example, a file, a resource, account information, or a password. The first data may be related to a service executed by the electronic device. In the data protection method and apparatus, and the electronic device that are provided in this application, a specific form of data includes but is not limited to a file, a resource, account information, a password, or the like. This is not limited in embodiments of this application.

Optionally, modifying the encryption manner of the first data includes: modifying the first encryption manner to the second encryption manner, or modifying the second encryption manner to the first encryption manner.

It may be understood that the encryption key in the first encryption manner continues to exist after the electronic device locks the screen, and after the electronic device locks the screen, data encrypted in the first encryption manner may continue to be accessed. The encryption key in the second encryption manner is released after the electronic device locks the screen, and after the electronic device locks the screen, data encrypted in the second encryption manner cannot be accessed. It can be learned that the data encrypted in the second encryption manner is more secure.

Based on the foregoing solution, a data encryption manner may be dynamically adjusted in different trigger events, to be applicable to different service processing scenarios of the electronic device, so that the electronic device can ensure normal data processing by the service while ensuring data security, thereby improving user experience.

With reference to the first aspect, in some implementations of the first aspect, the electronic device includes second data whose encryption manner is different from the encryption manner of the first data, and the second data and the first data belong to a same directory.

For example, the first data and the second data may be file data. When the first data is a first file and the second data is a second file, the first data and the second data may belong to a same folder. The folder belongs to an application of the electronic device.

Based on the foregoing solution, the electronic device may set different encryption manners based on different data, and data belonging to a same directory may also have different encryption manners. In other words, the electronic device may set an independent encryption manner for each piece of data, and set protection measures of different degrees for different data.

With reference to the first aspect, in some implementations of the first aspect, modifying the encryption manner of the first data in response to the first trigger event includes: modifying a data type of the first data in response to the first trigger event, where the data type includes a first type on which encryption is performed in the first encryption manner and a second type on which encryption is performed in the second encryption manner.

Optionally, modifying the data type of the first data includes: modifying the first type to the second type, or modifying the second type to the first type.

For example, the first data is a first file, and a file type of the first file is modified in response to the first trigger event. For example, the file type of the first file is modified to the first type, or the file type of the first file is modified to the second type.

Based on the foregoing solution, the electronic device may dynamically adjust an encryption manner of data by modifying a data type of the data, to adapt to a current service processing scenario of the electronic device.

With reference to the first aspect, in some implementations of the first aspect, modifying the data type of the first data in response to the first trigger event includes: modifying the data type of the first data to the second type in response to no access to the first data within first preset duration.

It should be noted that, if an original data type of the first data is the first type, the data type of the first data is modified from the first type to the second type in response to no access to the first data within the first preset duration by the electronic device; or if an original data type of the first data is the second type, the data type of the first data remains as the first data in response to no access to the first data within the first preset duration by the electronic device.

For example, the first preset duration may be preset by a system, set by a user, or determined through artificial intelligence learning. This is not limited in this application.

For example, if the electronic device does not process a service corresponding to the first data within the first preset duration (for example, two hours), it indicates that the electronic device temporarily does not need to access the first data, or if the electronic device completes execution of the service corresponding to the first data, the data type of the first data may be modified to the second type, to improve a protection degree of the first data.

Optionally, when the first data is not accessed within the first preset duration, the data type of the first data is modified to the second type in response to an unlocking operation.

It may be understood that modification of the data type may be triggered when the electronic device is unlocked.

With reference to the first aspect, in some implementations of the first aspect, modifying the data type of the first data in response to the first trigger event includes: modifying the data type of the first data to the first type in response to a screen-locking operation and execution of a service corresponding to the first data by the electronic device.

It should be noted that, if the original data type of the first data is the second type, the data type of the first data is modified to the first type in response to the screen-locking operation and the execution of the service corresponding to the first data by the electronic device; or when the original data type of the first data is the first type, the data type of the first data remains as the first type in response to the screen-locking operation and the execution of the service corresponding to the first data by the electronic device.

For example, when the electronic device locks the screen, the electronic device still needs to process the service corresponding to the first data. It indicates that the electronic device needs to access the first data even when the electronic device locks the screen. In this case, the data type of the first data may be modified to the first type, so that the service corresponding to the first data is successfully executed.

For example, the service corresponding to the first data includes services such as data upload, data synchronization, and data update that are related to interaction between the electronic device and a cloud; further includes services such as data editing, data storage, and local data caching that are processed by the electronic device locally; and further includes services such as projection, audio and video playing, and call that are run in the background of the electronic device.

With reference to the first aspect, in some implementations of the first aspect, modifying the data type of the first data in response to the first trigger event includes: when an encryption key of the first data exists, modifying the data type of the first data in response to the first trigger event.

In other words, a prerequisite for the electronic device to change the data type of the first data is that in addition to the first trigger event, the electronic device further needs to determine that the encryption key of the first data exists.

For example, in response to no access to first data within the first preset duration by the electronic device, when the encryption key of the first data exists, the data type of the first data is modified to the second type. In response to the screen-locking operation and the execution of the service corresponding to the first data by the electronic device, when the encryption key of the first data exists, the data type of the first data is modified to the first type.

For example, if the original data type of the first data is the first type and an original encryption manner of the first data is the first encryption manner, the encryption key of the first data is the encryption key in the first encryption manner. In response to no access to first data within the first preset duration by the electronic device, when the encryption key in the first encryption manner exists, the data type of the first data is modified to the second type.

With reference to the first aspect, in some implementations of the first aspect, modifying the encryption manner of the first data in response to the first trigger event includes: after completing the service corresponding to the first data, releasing the encryption key of the first data in response to the screen-locking operation and the execution of the service corresponding to the first data by the electronic device.

It should be noted that the electronic device may change an occasion for releasing the encryption key of the first data. When the electronic device further needs to execute the service corresponding to the first data after the electronic device locks the screen, the occasion for releasing the encryption key of the first data may be extended until the electronic device completes the service corresponding to the first data.

It may be understood that, after second preset duration after the electronic device locks the screen and completes the service corresponding to the first data, the encryption key of the first data may be released.

Based on the foregoing solution, in some service scenarios corresponding to data, an encryption manner may be adjusted without changing a data type, so that data security and normal running of a service corresponding to the data are considered while a large quantity of overheads are avoided.

With reference to the first aspect, in some implementations of the first aspect, the first data includes a bulk file.

With reference to the first aspect, in some implementations of the first aspect, the service corresponding to the first data includes data transmission.

For example, data transmission includes data update and data synchronization.

With reference to the first aspect, in some implementations of the first aspect, the encryption manner of the first data is the second encryption manner.

For example, the service corresponding to the first data is a mobile phone cloning service. In response to the screen-locking operation and execution of the mobile phone cloning service by the electronic device, the electronic device may release the encryption key of the first data two hours after completing the mobile phone cloning service.

With reference to the first aspect, in some implementations of the first aspect, the first data includes first information, the first information indicates the data type of the first data, and the data type includes the first type on which encryption is performed in the first encryption manner and the second type on which encryption is performed in the second encryption manner.

For example, the first information may represent a data type in a form of a field or a bit. For example, '00' indicates the first type, and '01' indicates the second type.

It may be understood that the data type is related to the encryption manner, and the electronic device may determine the encryption manner based on the data type. When the data type of the first data is the first type, the first data may be encrypted in the first encryption manner. When the data type of the first data is the second type, the second data may be encrypted in the second encryption manner.

With reference to the first aspect, in some implementations of the first aspect, the encryption key in the second encryption manner is related to an identifier of an application, and the application includes the first data.

According to a second aspect, a data protection apparatus is provided. The apparatus includes: a processing unit, configured to modify an encryption manner of first data in response to a first trigger event, where the encryption manner includes a first encryption manner and a second encryption manner, an encryption key in the first encryption manner continues to exist after the apparatus locks a screen, and an encryption key in the second encryption manner is released after the apparatus locks the screen.

With reference to the second aspect, in some implementations of the second aspect, the apparatus includes second data whose encryption manner is different from the encryption manner of the first data, and the second data and the first data belong to a same directory.

With reference to the second aspect, in some implementations of the second aspect, the processing unit is specifically configured to modify a data type of the first data in response to the first trigger event, where the data type includes a first type on which encryption is performed in the first encryption manner and a second type on which encryption is performed in the second encryption manner.

With reference to the second aspect, in some implementations of the second aspect, the processing unit is specifically configured to modify the data type of the first data to the second type in response to no access to the first data within first preset duration.

With reference to the second aspect, in some implementations of the second aspect, the processing unit is specifically configured to modify the data type of the first data to the first type in response to a screen-locking operation and execution of a service corresponding to the first data by the apparatus.

With reference to the second aspect, in some implementations of the second aspect, the processing unit is specifically configured to: when an encryption key of the first data exists, modify the data type of the first data in response to the first trigger event.

With reference to the second aspect, in some implementations of the second aspect, the processing unit is specifically configured to: after completing the service corresponding to the first data, release the encryption key of the first data in response to the screen-locking operation and the execution of the service corresponding to the first data by the apparatus.

With reference to the second aspect, in some implementations of the second aspect, the first data includes a bulk file.

With reference to the second aspect, in some implementations of the second aspect, the service corresponding to the first data includes data transmission.

With reference to the second aspect, in some implementations of the second aspect, the encryption manner of the first data is the second encryption manner.

With reference to the second aspect, in some implementations of the second aspect, the first data includes first information, the first information indicates the data type of the first data, and the data type includes the first type on which encryption is performed in the first encryption manner and the second type on which encryption is performed in the second encryption manner.

With reference to the second aspect, in some implementations of the second aspect, the encryption key in the second encryption manner is related to an identifier of an application, and the application includes the first data.

According to a third aspect, an electronic device is provided, including one or more processors and one or more memories. The one or more memories store one or more computer programs. The one or more computer programs include instructions. When the instructions are executed by the one or more processors, the electronic device is enabled to perform the method according to any one of the first aspect and the possible implementations of the first aspect.

According to a fourth aspect, a data protection apparatus is provided, including a processor coupled to a memory. The memory is configured to store a computer program, and the processor is configured to run the computer program, so that the data protection apparatus performs the method according to any one of the first aspect and the possible implementations of the first aspect.

With reference to the fourth aspect, in some implementations of the fourth aspect, the data protection apparatus further includes one or both of the memory and a transceiver, and the transceiver is configured to receive a signal and/or send a signal.

According to a fifth aspect, a computer-readable storage medium is provided. The computer-readable storage medium stores a computer program, and when the computer program is executed by a computer, the computer is enabled to perform the method according to any one of the first aspect and the possible implementations of the first aspect.

According to a sixth aspect, a computer program product including instructions is provided. When the computer program product runs on a computer, the computer is enabled to perform the method according to any one of the first aspect and the possible implementations of the first aspect.

According to a seventh aspect, a chip is provided. The chip includes a processor and a data interface, and the processor reads, through the data interface, instructions stored in a memory, to perform the method according to any one of the first aspect and the possible implementations of the first aspect.

With reference to the seventh aspect, in a possible implementation, the processor is coupled to the memory through an interface.

With reference to the seventh aspect, in a possible implementation, the chip system further includes the memory. The memory stores the computer program or the computer instructions.

### BRIEF DESCRIPTION OF DRAWINGS

FIG. 1 is a diagram of a structure of an electronic device;
FIG. 2 is a block diagram of a software structure of an electronic device according to an embodiment of this application;
FIG. 3 is a diagram of a structure of a file according to an embodiment of this application;
FIG. 4 is a diagram of file type switching according to an embodiment of this application;
FIG. 5 is a schematic flowchart of a method for dynamically adjusting an encryption manner according to an embodiment of this application; and
FIG. 6 is a schematic flowchart of a data protection method according to an embodiment of this application.

### DESCRIPTION OF EMBODIMENTS

The following describes technical solutions of this application with reference to accompanying drawings.

Terms used in the following embodiments are merely intended to describe specific embodiments, but are not intended to limit this application. The terms "one", "a", "the", "the foregoing", "this", and "the one" of singular forms used in the specification and the appended claims of this application are also intended to include expressions such as "one or more", unless otherwise specified in the context clearly. It should be further understood that in the following embodiments of this application, "at least one" and "one or more" refer to one, two, or more. The term "and/or" is used to describe an association relationship between associated objects and indicates that three relationships may exist. For example, A and/or B may indicate the following cases: Only A exists, both A and B exist, and only B exists, where A and B may be singular or plural. The character "/" usually indicates an "or" relationship between the associated objects.

Reference to "an embodiment", "some embodiments", or the like described in the specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. The terms "include", "comprise", "have", and their variants all mean "include but are not limited to", unless otherwise specifically emphasized.

The following describes an electronic device, a user interface used for the electronic device, and embodiments used for using the electronic device. In some embodiments, the electronic device may be a portable electronic device that further includes another function like a personal digital assistant function and/or a music player function, for example, a mobile phone, a tablet computer, or a wearable electronic device (for example, a smartwatch) having a wireless communication function. An example embodiment of a portable electronic device includes but is not limited to a portable electronic device using Harmony OS^{®}, iOS^{®}, Android^{®}, Microsoft^{®}, or another operating system. The portable electronic device may alternatively be another portable electronic device, like a laptop (Laptop). It should be further understood that, in some other embodiments, the electronic device may not be the portable electronic device but a desktop computer. In some other embodiments, the electronic device may be an instrument for measurement, for example, an oscilloscope.

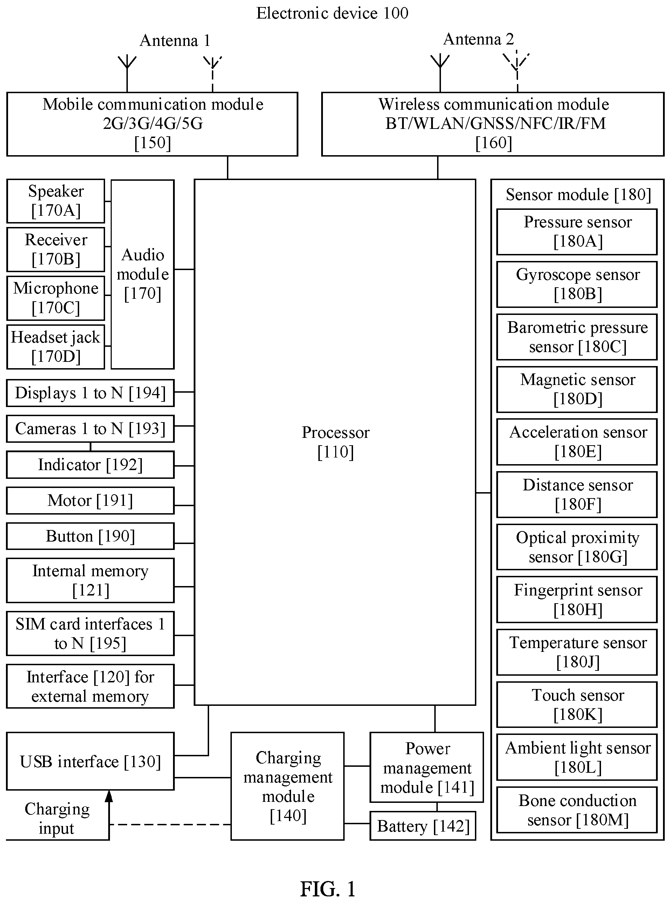

For example, FIG. 1 is a diagram of a structure of an electronic device 100. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, or the like.

It can be understood that the structure illustrated in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has been recently used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like.

The modem processor may include a modulator and a demodulator. The modulator is configured to modulate a to-be-transmitted low-frequency baseband signal into a medium-high frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194.

The wireless communication module 160 may provide a solution of wireless communication that is applied to the electronic device 100 and that includes a wireless local area network (wireless local area network, WLAN) (such as a wireless fidelity (wireless fidelity, Wi-Fi) network), a Bluetooth (Bluetooth, BT), a global navigation satellite system (global navigation satellite system, GNSS), a frequency modulation (frequency modulation, FM) technology, a near field communication (near field communication, NFC) technology, an infrared (infrared, IR) technology and the like. The wireless communication module 160 may be one or more components integrating at least one communication processing module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-transmitted signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the one or more GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diodes, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The interface 120 for external memory may be used to connect to an external memory card, for example, a micro SD card, to extend a storage capability of the electronic device 100. The external memory card communicates with the processor 110 through the interface 120 for external memory, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement audio functions such as music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or a voice message is received through the electronic device 100, the receiver 170B may be put close to a human ear to listen to a voice.

The microphone 170C is configured to convert a sound signal into an electrical signal.

The pressure sensor 180A is configured to sense a pressure signal, and can convert the pressure signal into an electrical signal.

The fingerprint sensor 180H is configured to collect a fingerprint. The electronic device 100 may implement fingerprint unlock, access app lock, fingerprint photographing, fingerprint incoming call answering, and the like by using an acquired fingerprint feature.

The touch sensor 180K is also referred to as a touch panel. The touch sensor 180K is configured to detect a touch operation performed on or near the touch sensor.

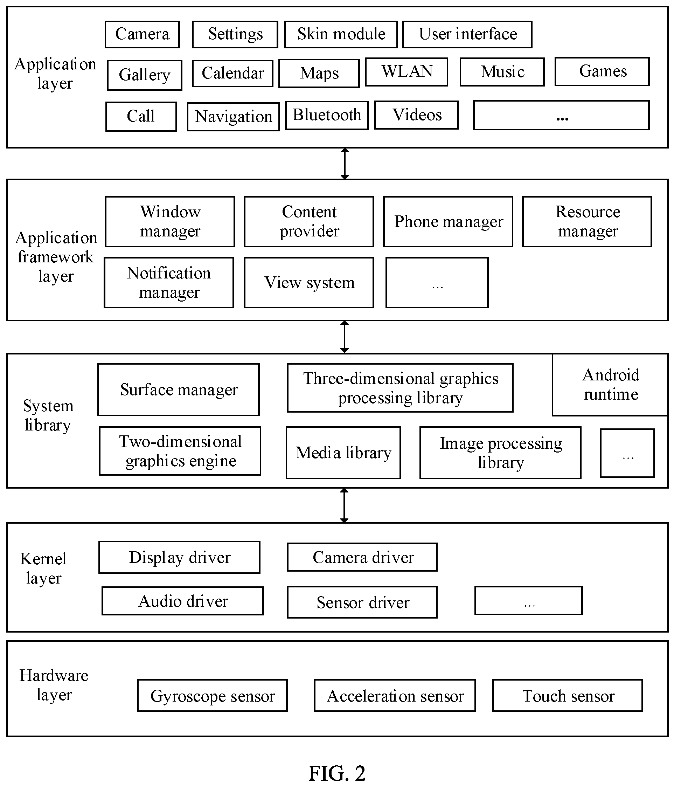

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application layer may include Camera, Settings, a skin module, a user interface (user interface, UI), a third-party application, and the like. The third-party application may include Gallery, Calendar, Call, Maps, Navigation, WLAN, Bluetooth, Music, Videos, Messages, and the like.

The application framework layer provides an application programming interface (application programming interface, API) and a programming framework for an application at the application layer. The application framework layer may include some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like. The content provider is configured to store and obtain data, and enable the data to be accessed by an application. The data may include a video, an image, audio, calls that are made and received, a browsing history, a bookmark, a phone book, and the like.

The view system includes visual controls such as a control for displaying a text and a control for displaying an image. The view system may be configured to construct an application. A display interface may include one or more views.

The phone manager is configured to provide a communication function of the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification-type message. The message may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert tone is made, the electronic device vibrates, or the indicator light blinks.

The runtime includes a core library and a virtual machine. The Android runtime is responsible for invocations and management of the Android system.

The core library includes two parts: a performance function that needs to be invoked in java language, and a core library of Android.

The application layer and the application framework layer run on a virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, an OpenGL ES), and a two-dimensional graphics engine (for example, an SGL).

The surface manager is configured to manage a display subsystem and provide fusion of 2D and 3D layers for a plurality of applications.

The media library supports playing and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for 2D drawing.

In addition, the system library may further include a status monitoring service module, for example, a physical status identification module, configured to analyze and identify a user gesture; and a sensor service module, configured to monitor sensor data uploaded by various sensors at a hardware layer, to determine a physical status of the electronic device 100.

The kernel layer is a layer between hardware and software. The kernel layer includes at least a display driver, a camera driver, an audio driver, and a sensor driver.

The hardware layer may include various sensors, for example, various sensors described in FIG. 1.

With reference to the electronic device described in FIG. 1 and FIG. 2, in embodiments of this application, the electronic device is a device that can run various applications, for example, a mobile phone terminal or a tablet computer. Physical components related to the electronic device 100 mainly include: hardware components such as a sensor, a decision support system (decision support system, DSS) display chip, a touch display, and a fingerprint recognition module; kernel software layers such as a screen management module, a display driver, a fingerprint driver, and accidental touch prevention; application framework layer functions such as accidental touch input prevention, screen control, an always on display (always on display, AOD) service, and power management; and application layer services such as a special adaptation application (camera), a third-party application, system hibernation, and AOD.

With development of science and technology, electronic devices become an integral part of people's production and life. Various data, for example, files, resources, account information, or passwords carried on the electronic devices relates to user privacy. Therefore, when providing various services for users, the electronic devices also need to consider protection of the data related to user privacy.

To protect user privacy, in an implementation, before the electronic device is unlocked for the first time after being powered on, data like a file exists in a form of encrypted ciphertext, and it is difficult to crack the data. After the electronic device is unlocked for the first time, data like a file exists in a form of decrypted plaintext, and it is not difficult to crack the data. After the electronic device is unlocked for the first time, even if the electronic device locks a screen again, data like a file is easily cracked, causing a loss to the user.

In another implementation, an application carried on the electronic device generally has a plurality of directories, and each directory may store a plurality of pieces of data. An encryption manner is set in a unit of a directory, and one or more pieces of data in each directory are protected by using a same encryption manner. Before the electronic device is unlocked for the first time after being powered on, data exists in a form of encrypted ciphertext, and it is difficult crack the data. After the electronic device is unlocked for the first time, data exists in a form of decrypted plaintext, and a system or an application can access plaintext data. After the electronic device locks a screen for a period of time, a key for decrypting the data is released, and the system or the application cannot continue to access the data. The decryption key is regenerated and the data is decrypted again only after the electronic device is unlocked again. This encryption manner is applicable to all data in the same directory and cannot be used for differentiated encryption. In this encryption manner, after the electronic device locks the screen again, the decryption key is released, so that data can be protected. However, when the electronic device is in a screen-locking state, the data cannot be accessed, and running of some services is blocked. For example, a gallery application needs to process recently photographed images, so that the gallery application classifies the images. After the electronic device locks the screen, the gallery application cannot read the images, resulting in an image processing service exception. For another example, when the electronic device is unlocked, a social application is uploading a plurality of images in a gallery application to a cloud disk. After the electronic device locks the screen, the images in the gallery application cannot be accessed, resulting in an image transmission service exception. For another example, when the electronic device is unlocked, a mobile phone cloning service is being processed. After the electronic device locks the screen, file transmission in a mobile phone cloning service scenario is blocked, resulting in a mobile phone cloning failure.

Therefore, to resolve the foregoing problems, this application provides a data protection method and apparatus, and an electronic device. The electronic device may set different encryption manners based on different data in a directory of an application, to provide protection measures of different degrees for the different data. For example, file data is used as an example, and files are classified into a type-A file and a type-B file. After the electronic device is unlocked for the first time, even if the electronic device locks a screen again, an encryption key of the type-A file continues to exist, and the type-A file exists in a form of plaintext and can be accessed by a system or an application. After the electronic device is unlocked for the first time, when the electronic device locks the screen again, an encryption key of the type-B file is released, the type-B file exists in a form of ciphertext, and the type-B file cannot be accessed by the system or the application. In addition, an encryption manner of same data can be dynamically adjusted to adapt to different service processing scenarios. In this way, the electronic device can ensure normal data processing by the service while ensuring data security, thereby improving user experience.

It should be noted that, in the data protection method and apparatus, and the electronic device provided in embodiments of this application, file protection is used as an example for specific description. In addition, a specific form of data to which the data protection method provided in this application is applicable includes but is not limited to a file, a resource, account information, a password, or the like. This is not limited in this application.

First, the data protection method provided in this application may be applied to an electronic device. The electronic device carries various applications, each application has one or more directories, and each directory includes one or more pieces of data. According to the data protection method in this application, an independent encryption manner may be set for each piece of data, and protection measures of different degrees may be set for different data.

For example, there are one or more folders in an application, and each folder includes one or more files. File types may be classified for the files, and different encryption manners are set for files of different file types.

For example, both a file 1 and a file 2 belong to a directory 1 (or a folder 1). The file 1 is a type-A file, and the file 2 is a type-B file. The file 1 may be encrypted in an encryption manner of the type-A file, to protect the file 1. The file 2 may be encrypted in an encryption manner of the type-B file, to protect the file 2.

It can be learned that even if the file 1 and the file 2 belong to a same directory or a same folder, encryption manners and protection degrees of the file 1 and the file 2 are different because the types of the file 1 and the file 2 are different.

In the data protection method provided in embodiments of this application, a data encryption manner may be determined based on a data type. When the data type is a first type, the data is encrypted in a first encryption manner. When the data type is a second type, the data is encrypted in a second encryption manner. In the data protection method provided in embodiments of this application, the first type may be referred to as a type A, and the second type may be referred to as a type B. An encryption key in the first encryption manner continues to exist after the electronic device locks a screen, and an encryption key in the second encryption manner is released after the electronic device locks the screen.

File protection is used as an example. Files are classified into a type-A file and a type-B file based on file types, and encryption manners of different file types are also different. The type-A file may be understood as data of the first type, and the type-A file is encrypted in the first encryption manner. The type-B file may be understood as data of the second type, and the type-B file is encrypted in the second encryption manner.

The following uses file protection as an example to specifically describe an encryption manner of the type-A file and an encryption manner of the type-B file.

The type-A file is a file that can be accessed after the electronic device locks the screen. After the electronic device is unlocked for the first time after being powered on, ciphertext of the type-A file is decrypted into a plaintext file. When the electronic device locks the screen again, an encryption key of the type-A file is not released and continues to exist. After the electronic device locks the screen, a system or an application can still access the type-A file, and execute a service related to the type-A file. The encryption key of the type-A file may be understood as an encryption key in the first encryption manner. The encryption key of the type-A file is used to encrypt a random number of a file, where the random number of the file is used to generate a key for encrypting the type-A file. The random number of the file is encrypted by using the encryption key of the type-A file, so that security for storing the random number of the file can be improved, and security of the type-A file is improved.

It should be noted that each file has a randomly generated random number, and the random number of each file may be used to generate a file encryption key (file encryption key, FEK) of the file. To store the random number of each file, the electronic device needs to encrypt the random number of each file. Different types of files use different keys to encrypt random numbers of files. The random number of the type-A file needs to be encrypted by using the encryption key of the type-A file.

In a process of encrypting the type-A file, a root key is generated when the electronic device is unlocked, and the encryption key of the type-A file is derived based on the root key. The random number (random) of the file is encrypted by using the encryption key of the type-A file, to obtain an encrypted random number of the file, and the electronic device may store the encrypted random number of the file. Then, the random number of the file is encrypted by using an original key to obtain an FEK of the file. Finally, plaintext of the file is encrypted by using the FEK of the file, to obtain the key of the file, and the encryption of the file is completed.

For example, the file 1 is the type-A file, and an encryption manner of the file 1 mainly includes the following steps.

Step 1: When the electronic device is unlocked for the first time, create a UserRootSecret for a user.

The UserRootSecret can be understood as a root key used to encrypt and protect user data, is used to generate another encryption key to ensure file or data security, and exists after the electronic device is unlocked and disappears after the electronic device locks a screen. It may be understood that a UserRootSecret is generated each time the user unlocks the electronic device. However, the UserRootSecret corresponds to the user, and the UserRootSecret generated each time may be the same.

Step 2: Obtain an encryption key of the type-A file by deriving the UserRootSecret.

It should be noted that the encryption key of the type-A file is a Key2, and the encryption key of the type-A file is not released after the electronic device locks the screen, and the key always exists.

For example, the encryption key of the type-A file may be derived from the UserRootSecret according to a key derivation function (key derivation function, KDF) encryption algorithm. The key obtained through derivation according to the KDF encryption algorithm can be used in an encryption process to protect files or data.

Step 3: Encrypt a random number of the file 1 by using the encryption key of the type-A file to obtain an encrypted random number of the file 1.

For example, an encryption (Encrypt, Enc) operation is performed based on the Key2 and the random number (random) of the file 1, to obtain the encrypted random number (EN1_random) of the file 1.

It should be noted that the random number may alternatively be a random character string, and is used to improve security during the encryption process. Generally, the random number is unpredictable, so that ciphertext generated during a plurality of times of encryption are different, thereby increasing difficulty in cracking the ciphertext.

It should be noted that different files have corresponding random numbers. To ensure security of the random number of the file, the random number of the file may be encrypted to obtain the encrypted random number of the file for storage.

Step 4: Encrypt the random number of the file 1 by using an original key to obtain a file encryption key of the file 1.

For example, an encryption operation is performed on the random number (random) of the file 1 according to the KDF encryption algorithm and by using the original key (ClassKey), to obtain the FEK of the file 1. The FEK of the file 1 may be used to encrypt the file 1, and is derived from the original key and the random number of the file 1, providing an additional layer of security protection.

It should be noted that the original key is related to flash memory storage (universal flash storage, UFS) hardware of the electronic device. Generally, one UFS has 8 to 16 original keys, and different applications may reuse a same original key.

Step 5: Encrypt the plaintext of the file 1 by using the file encryption key of the file 1, to obtain ciphertext of the file 1.

For example, the plaintext (plaintext body) of the file 1 is encrypted according to an advanced encryption standard-extended tweaked codebook mode (advanced encryption standard-extended tweaked codebook mode, AES-XTS) encryption algorithm and by using the FEK of the file 1, to obtain the ciphertext (encrypted body) of the file 1.

It should be noted that the AES-XTS encryption algorithm can ensure file security. Even if the electronic device is lost or stolen, it is difficult for an unauthorized user to access or decrypt the file.

It may be understood that the electronic device includes a kernel file system, and the kernel file system encrypts the file 1 by performing the foregoing step 1 to step 5. The encryption key Key2 of the type-A file obtained in step 2 is generated when the electronic device is unlocked for the first time after being powered on. When the electronic device locks the screen again, the Key2 is not released, and continues to exist.

For example, when the electronic device is unlocked for the first time after being powered on, the Key2 is generated. The FEK is finally obtained based on the Key2 according to a series of encryption algorithms. The ciphertext of the file 1 is decrypted by using the FEK, to obtain the plaintext of the file 1, so that the system or the application accesses the file 1.

It should be noted that main steps of the foregoing encryption manner of the type-A file are merely an example for description, and a specific encryption manner of the type-A file is not limited in this embodiment of this application.

The type-B file is a file that cannot be accessed after the electronic device locks the screen for specific duration. After the electronic device is unlocked for the first time after being powered on, ciphertext of the type-B file is decrypted into a plaintext file. When the electronic device locks the screen again, the key is released, and the system or the application cannot access the type-B file, and cannot execute a service related to the type-B file. Only when the electronic device is unlocked again, the key is obtained again, and the ciphertext of the type-B file is decrypted into a plaintext file, and the system or the application can access the type-B file. In the foregoing descriptions, the key is released after the electronic device locks the screen for the specific duration, or the key may be released immediately after the electronic device locks the screen. The encryption key of the type-B file may be understood as the encryption key in the second encryption manner. The encryption key of the type-B file is used to encrypt the random number of the file, and the random number of the file is used to generate a key for encrypting the type-B file. The random number of the file is encrypted by using the encryption key of the type-B file, so that security for storing the random number of the file can be improved, and security of the type-B file is improved.

A random number of the type-B file needs to be encrypted by using the encryption key of the type-B file.

In a process of encrypting the type-B file, a root key is generated when the electronic device is unlocked, and the encryption key of the type-B file is derived based on the root key and an application identifier. The random number of the file is encrypted by using the encryption key of the type-B file, to obtain an encrypted random number of the file, and the electronic device may store the encrypted random number of the file. Then, the random number of the file is encrypted by using an original key to obtain an FEK of the file. Finally, plaintext of the file is encrypted by using the FEK of the file, to obtain the key of the file, and the encryption of the file is completed.

For example, the file 2 is the type-B file, and an encryption manner of the file 2 may mainly include the following steps.

Step 1: When the electronic device is unlocked for the first time, create a UserRootSecret for a user.

The UserRootSecret can be understood as a root key used to encrypt and protect user data, is used to generate another encryption key to ensure file or data security, and exists after the electronic device is unlocked and disappears after the electronic device locks a screen. It may be understood that a UserRootSecret is generated each time the user unlocks the electronic device. However, the UserRootSecret corresponds to the user, and the UserRootSecret generated each time may be the same.

Step 2: Obtain an encryption key of the type-B file by deriving the UserRootSecret and the application identifier.

It should be noted that the encryption key of the type-B file is an APP_ID Key2. After the electronic device locks the screen for a period of time, the encryption key of the type-B file is released. After the electronic device is unlocked again, a new encryption key of the type-B file is generated.

For example, the encryption key of the type-B file may be derived from the UserRootSecret and the application identifier (application_identifier, APP_ID) according to a KDF encryption algorithm. The key obtained through derivation according to the KDF encryption algorithm can be used in an encryption process to protect files or data. The application identifier may be an application package name.

Step 3: Encrypt a random number of the file 2 by using the encryption key of the type-B file to obtain an encrypted random number of the file 2.

For example, an encryption (Encrypt, Enc) operation is performed based on the APP_ID Key2 and the random number (random) of the file 2, to obtain the encrypted random number (EN2_random) of the file 2.

It should be noted that the random number may alternatively be a random character string, and is used to improve security during the encryption process. Generally, the random number is unpredictable, so that ciphertext generated during a plurality of times of encryption are different, thereby increasing difficulty in cracking the ciphertext.

Step 4: Encrypt the random number of the file 2 by using an original key to obtain a file encryption key of the file 2.

For example, an encryption operation is performed on the random number (random) of the file 2 according to the KDF encryption algorithm and by using the original key (ClassKey), to obtain an FEK of the file 2. The FEK of the file 2 may be used to encrypt the file 2, and is derived from the original key and the random number of the file 2, providing an additional layer of security protection.

It should be noted that the original key is related to flash memory storage (universal flash storage, UFS) hardware of the electronic device. Generally, one UFS has 8 to 16 original keys, and different applications may reuse a same original key.

Step 5: Encrypt the plaintext of the file 2 by using the file encryption key of the file 2, to obtain ciphertext of the file 2.

For example, the plaintext (plaintext body) of the file 2 is encrypted according to an AES-XTS encryption algorithm and by using the FEK of the file 2, to obtain the ciphertext (encrypted body) of the file 2.

It should be noted that the AES-XTS encryption algorithm can ensure file security. Even if the electronic device is lost or stolen, it is difficult for an unauthorized user to access or decrypt the file.

It may be understood that the electronic device includes a kernel file system, and the kernel file system encrypts the file 2 by performing the foregoing step 1 to step 5. The encryption key APP_ID Key2 of the type-B file obtained in step 2 is generated when the electronic device is unlocked for the first time after being powered on. When the electronic device locks the screen for a period of time again, the APP_ID Key2 is released. When the electronic device is unlocked again, the APP_ID Key2 is generated again.

For example, when the electronic device is unlocked, the APP_ID Key2 is generated. The FEK is finally obtained based on the APP_ID Key2 according to a series of encryption algorithms. The ciphertext of the file 2 is decrypted by using the FEK, to obtain the plaintext of the file 2, so that the system or the application accesses the file 2.

It should be noted that main steps of the foregoing encryption manner of the type-B file are merely an example for description, and a specific encryption manner of the type-B file is not limited in this embodiment of this application.

It can be learned that, both the encryption key of the type-A file and the encryption key of the type-B file are used to encrypt the random number of the file. The encryption key of the type-A file is generated when the electronic device is unlocked for the first time after being powered on. No matter whether the electronic device locks the screen again, the encryption key of the type-A file continues to exist, and the system or the application can continuously access the type-A file. The encryption key of the type-B file is generated when the electronic device is unlocked for the first time after being powered on, and is released when the electronic device locks the screen again for the specific duration, and the system or the application cannot access the type-B file. Simply speaking, the type-B file has a higher protection degree.

It should be noted that, before the electronic device is delivered from a factory, a file type of a file may be preset as a type-A file or a type-B file. Information that indicates the file type may be carried in metadata of the file. The metadata of the file may be understood as information that describes a file attribute and a feature.

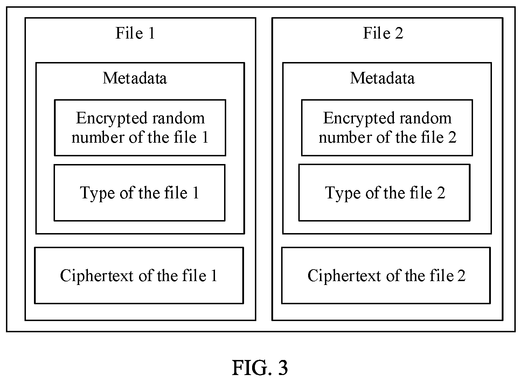

For example, FIG. 3 is a diagram of a file structure. A file 1 and a file 2 shown in FIG. 3 belong to a same directory. It can be learned that one directory may include a plurality of files.

The file 1 includes metadata of the file 1 and ciphertext of the file 1, and the metadata of the file 1 includes an encrypted random number of the file 1 and a type of the file 1. The ciphertext of the file 1 is obtained through encryption by using an FEK of the file 1. The type of the file 1 may be preset by a system, and the file type may be represented in a form of a field, a bit, or the like. For example, '00' indicates a type-A file, and '01' indicates a type-B file. A random number of the file 1 is randomly generated. The random number of the file 1 may be encrypted by using an encryption key of the file 1 to obtain the encrypted random number of the file 1, and the encrypted random number of the file 1 is stored in the metadata of the file 1. The encryption key of file 1 is related to the file type of the file 1. If the file 1 is a type-A file, the encryption key of the file 1 is an encryption key of the type-A file. If the file 1 is a type-B file, the encryption key of the file 1 is an encryption key of the type-B file.

Similarly, the file 2 includes metadata of the file 2 and ciphertext of the file 2, and the metadata of the file 2 includes an encrypted random number of the file 2 and a type of the file 2. The ciphertext of the file 2 is obtained through encryption by using an FEK of the file 2. The type of the file 2 may be preset by a system. A random number of the file 2 is randomly generated. The random number of the file 2 may be encrypted by using an encryption key of the file 2 to obtain the encrypted random number of the file 2, and the encrypted random number of the file 2 is stored in the metadata of the file 2. The encryption key of file 2 is related to the file type of the file 2. If the file 2 is a type-A file, the encryption key of the file 2 is an encryption key of the type-A file. If the file 2 is a type-B file, the encryption key of the file 2 is an encryption key of the type-B file.

For example, the type-A file may be a file that is currently being accessed by an electronic device, or may be a file with a low protection degree preset by a system. For example, the type-A file may be a file that is currently being downloaded in the background, or a file that is still updated in real time when the electronic device locks a screen. The type-B file may be a file that is not currently accessed by the electronic device, or may be a file with a high protection degree preset by the system. For example, the type-B file may be a file stored in a memo or an SMS message in a mobile phone.

It should be noted that, although the system may preset the file type, the file type may also be dynamically adjusted as a current service processing scenario of the electronic device changes.

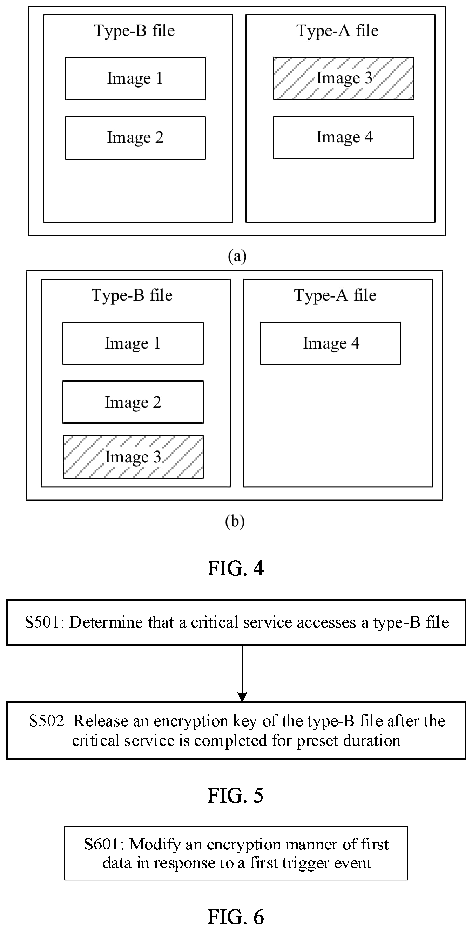

For ease of understanding, FIG. 4 is a diagram of file type switching.

As shown in (a) in FIG. 4, a directory of a gallery application includes a type-A file and a type-B file, where the type-A file includes an image 3 and an image 4, and the type-B file includes an image 1 and an image 2. Currently, an electronic device is processing the image 3 in the type-A file, and even when the electronic device locks a screen, the electronic device may continue to process the image 3.

As shown in (b) in FIG. 4, when a system service module in the electronic device determines that processing of the image 3 is completed, and an encryption key of the image 3 is not released, a file type of the image 3 may be switched to the type B. After a kernel file system completes file type switching, in the directory, the type-A file includes the image 4, and the type-B file includes the image 1, the image 2, and the image 3.

It should be noted that switching of a file type from the type B to the type A is similar to that shown in FIG. 4. To avoid redundancy, details are not described herein again.

In an implementation, a file type of a file is switched from the type A to the type B, and an encryption key of the type-A file is not released. An encrypted random number of the file is decrypted by using the encryption key of the type-A file to obtain a random number of the file, and the random number of the file is re-encrypted by using the encryption key of the type-B file.

For example, the type of the file 1 is switched from the type A to the type B. When a Key2 is not released, the Key2 is used to decrypt the encrypted random number EN1_random of the file 1 to obtain a random number random1 of the file 1, and an APP_ID Key2 is used to re-encrypt the random number random1 of the file 1 to obtain EN2_random. The random number random1 of the file 1 does not change. After the random number random1 of the file 1 is re-encrypted by using the APP_ID Key2, the FEK of the file 1 is not changed, and the ciphertext of the file 1 is not affected.

In another implementation, a file type of a file is switched from the type B to the type A, and the encryption key of the type-B file is not released. An encrypted random number is decrypted by using the encryption key of the type-B file to obtain a random number of the file, and the random number of the file is re-encrypted by using the encryption key of the type-B file.

For example, the type of the file 2 is switched from the type B to the type A. When an APP_ID Key2 is not released, the APP_ID Key2 is used to decrypt the encrypted random number EN2_random of the file 1 to obtain the random number random2 of the file 2, and a Key2 is used to re-encrypt the random number random2 of the file 2 to obtain EN1_random. The random number random2 of the file 2 does not change. After the random number random2 of the file 2 is re-encrypted by using the encryption key Key2 of the type-A file, the FEK of the file 2 is not changed, and the ciphertext of the file 2 is not affected.

It can be seen that, when the file type changes, only the random number of the file needs to be re-encrypted, and the file does not need to be re-encrypted, thereby saving overheads while protecting data security.

In addition, the data protection method provided in this application may be dynamically adjusted. A data encryption manner may be modified in response to a first trigger event. Data encryption manners may be modified in different ways for different first trigger events. The encryption manner can be modified in the following two scenarios.

When the electronic device does not access the data within the preset duration, the electronic device may modify the data type of the data to the second type; and when the electronic device locks the screen and executes a service corresponding to the data, the electronic device may modify the data type of the data to the first type. In other words, the data encryption manner is dynamically adjusted by modifying the data type. In addition, the electronic device locks the screen and executes a service corresponding to the data, and an occasion for releasing the encryption key may be adjusted. In other words, the occasion for releasing the encryption key may be temporarily adjusted while the data type remains unchanged, to dynamically adjust the encryption manner.

It should be noted that the encryption manner includes a first encryption manner and a second encryption manner. The encryption manner may be modified from the first encryption manner to the second encryption manner, or may be modified from the second encryption manner to the first encryption manner. The data type may be modified from the first type to the second type, or may be modified from the second type to the first type.

The following describes in detail the foregoing two scenarios of dynamically adjusting an encryption manner.

In an implementation, the encryption manner is dynamically adjusted by modifying the data type.

It should be noted that, a prerequisite for changing a data type is that an encryption key of an original data type is not released.

File protection is used as an example to describe how to dynamically adjust the encryption manner in a scenario.

For example, the file type may be switched from a type-A file to a type-B file, or may be switched from a type-B file to a type-A file.

In a scenario in which a type-A file is switched to a type-B file, it is assumed that a system-preset file type is a type A, and an encryption key of the type-A file continuously exists. In other words, after the type-A file is decrypted into plaintext, even if an electronic device locks a screen, a system or an application can still access the type-A file.

When a current service related to the type-A file is processed and the encryption key of the type-A file is not released, the file type may be switched to a type B, to improve a protection degree of the file. Alternatively, when a service related to the type-A file is not processed within preset duration, it indicates that the system or the application currently does not need to access the type-A file. In addition, when the encryption key of the type-A file is not released, the file type may be switched to the type B.

In other words, in a current service processing scenario of the electronic device, when a file does not need to be accessed, a file type of the file may be switched to a type-B file with a higher protection degree. If the system-preset file type of the file is the type-B file, the file type of the file may remain unchanged.

For example, a current service of an electronic device is processing an image in a gallery application, and a file type of the image in the gallery application that may be preset by the system for processing is a type-A file. In other words, when the electronic device locks a screen, the image in the gallery application may also be accessed by a system or an application, to facilitate image processing. It is assumed that it is estimated that it takes 24 hours to process the image in the gallery application. After service processing time reaches 24 hours, the electronic device determines whether the current service (that is, processing the image in the gallery application) is completed. After determining that the current service is completed, the electronic device further needs to determine whether an encryption key of the image in the gallery application that is used as the type-A file is not released. When the current service is completed and the encryption key of the image in the gallery application is not released, the electronic device may switch the file type to the type B.

In a scenario in which a type-B file is switched to a type-A file, it is assumed that a system-preset file type is a type B. An encryption key of the type-B file is released after an electronic device locks a screen for a period of time. In other words, after the electronic device locks the screen, a system or an application cannot access the type-B file. The encryption key of the type-B file is generated again only after the electronic device is unlocked again.

When the electronic device locks the screen, the electronic device still needs to process a service related to the type-B file. When the encryption key of the type-B file is not released, the file type may be switched to a type A, to ensure normal processing of a current service. If the system-preset file type of the file is the type-A file, the file type of the file may remain unchanged.

For example, an electronic device needs to share an image or a video with another user through a social application. When the electronic device locks a screen, normal transmission of the shared image or video also needs to be ensured. If the shared image or video is a type-B file, and an encryption key of the type-B file is not released, the electronic device may switch a file type to a type A.

Based on the foregoing solutions, the data protection method provided in this application ensures security of current data while considering normal processing of a service corresponding to the data, so that a normal function of an electronic device is not affected while user privacy is protected.

In another implementation, a data type remains unchanged, and an encryption manner is temporarily modified.

File protection is used as an example to describe how to dynamically adjust the encryption manner in another scenario.

It can be learned from the foregoing descriptions that encryption manners of files of a same file type are the same. For example, in an encryption manner of a type-B file, an encryption key APP_ID Key2 of the type-B file is generated when an electronic device is unlocked. After the electronic device locks a screen for a period of time, the APP_ID Key2 is released, and a system or an application cannot access the type-B file.

To enable the system or the application to still access the file when the electronic device locks the screen, the foregoing method may be used to switch a type of the file from a type B to a type A. However, in some critical service processing scenarios, switching a file type and re-encrypting a random number of a file may cause a large quantity of overheads, and affect power consumption of the electronic device. Therefore, in the data protection method provided in this embodiment of this application, to enable the electronic device to be used in more diversified service processing scenarios, an encryption manner may be adjusted without changing a data type.

It should be noted that the foregoing critical service processing scenarios may include a mobile phone cloning scenario, a scenario in which a plurality of images in a gallery application are uploaded to a cloud disk, and the like. Simply speaking, a service scenario in which the data type remains unchanged and the encryption manner is dynamically adjusted usually involves a batch file. Relatively, a service scenario in which the encryption manner is dynamically adjusted by adjusting the data type usually involves a non-batch file.

Specifically, the electronic device provides a dynamic key release and management mechanism. File protection is used as an example. For a type-B file in a critical service processing scenario, time for releasing an encryption key of the type-B file may be temporarily prolonged, to ensure normal processing of a critical service. After the critical service is processed, the encryption key of the type-B file can be released, to ensure security of the type-B file.

For example, an encryption manner of a type-B file is adjusted. FIG. 5 is a schematic flowchart of a method for dynamically adjusting an encryption manner. This method dynamically adjusts the encryption manner without changing a file type. This method ensures normal running of an appropriate service while ensuring file data security.

S501: Determine that a critical service accesses a type-B file.

For example, when determining that a current critical service of an electronic device needs to access a type-B file, a system service module in the electronic device may trigger adjustment of an encryption manner of the type-B file.

It may be understood that, the critical service includes a mobile phone cloning scenario, a scenario in which a plurality of images in a gallery application are uploaded to a cloud disk, and the like, and involves batch file processing. In the mobile phone cloning service scenario, an image, a video, a message, or the like that needs to be cloned may be a type-B file. In the service scenario in which the plurality of images in the gallery application are uploaded to the cloud disk, the images in the gallery may be a type-B file.

S502: Release an encryption key of the type-B file after the critical service is completed for preset duration.

For example, when determining that the current critical service of the electronic device needs to access the type-B file, the system service module may request a file management module of the electronic device to reserve the key, that is, request not to release the key of the type-B file within a period of time after the electronic device locks a screen. The file management module may send indication information to a kernel file system, to indicate the kernel file system not to release the key of the type-B file within a period of time after the electronic device locks the screen. After the kernel file system determines that the critical service is completed for the preset duration, the encryption key of the type-B file may be released.

It should be noted that the foregoing limitation on functional modules in the electronic device is merely an example for description, and specific steps performed by the functional modules in the electronic device are not limited in this application.

It should be noted that, after the encryption manner of the type-B file is dynamically adjusted, the encryption key of the type-B file may be reserved for longer time, to ensure normal running of the critical service.

For example, in a service scenario in which a plurality of images in a gallery application are uploaded to a cloud disk, the system service module determines that an image in the gallery is currently being transmitted, and the system service module requests the file management module to reserve an encryption key of the image in the gallery. The file management module indicates, based on the request of the system service module, the kernel file system not to release the encryption key of the image in the gallery after the electronic device locks the screen for a period of time, and indicates to release the encryption key of the image in the gallery after the preset duration after the service is completed.

For another example, in a mobile phone cloning service scenario, the system service module determines that a mobile phone cloning service is being executed currently, and the system service module requests the file management module to reserve an encryption key of a file in the mobile phone cloning service. The file management module indicates, based on the request of the system service module, the kernel file system not to release the encryption key of the file in the mobile phone cloning service after the electronic device locks the screen for a period of time, and indicates to release the encryption key of the file in the mobile phone cloning service after the preset duration after the service is completed.

Based on the foregoing solution, in some service scenarios, an encryption manner may be adjusted without changing a data type, so that data security and normal running of a service corresponding to the data are considered while a large quantity of overheads are avoided.

FIG. 6 is a schematic flowchart of a data protection method according to this application. The method may be applied to an electronic device. The following specifically describes the method.

S601: Modify an encryption manner of first data in response to a first trigger event.

It may be understood that the first data is data carried on the electronic device, for example, a file, a resource, account information, or a password. The first data may be related to a service executed by the electronic device.

It should be noted that, in the data protection method and apparatus, and the electronic device that are provided in embodiments of this application, a specific form of data includes but is not limited to a file, a resource, account information, a password, or the like. This is not limited in embodiments of this application.

The foregoing encryption manner includes a first encryption manner and a second encryption manner, an encryption key in the first encryption manner continues to exist after the electronic device locks a screen, and an encryption key in the second encryption manner is released after the electronic device locks the screen.

Optionally, the encryption key in the second encryption manner is related to an identifier of an application, and the application includes the first data.

For example, the first encryption manner may be understood as an encryption manner of the foregoing type-A file, and the second encryption manner may be understood as an encryption manner of the foregoing type-B file. The encryption key in the first encryption manner may be understood as an encryption key of the foregoing type-A file. After the electronic device is unlocked for the first time after being powered on, ciphertext of the type-A file may be decrypted into a plaintext file. When the electronic device locks the screen again, the encryption key of the type-A file may not be released and may continue to exist. In other words, after the electronic device locks the screen, the system or the application may still access the data encrypted in the first encryption manner. The encryption key in the second encryption manner may be understood as the encryption key of the foregoing type-B file. After the electronic device is unlocked for the first time after being powered on, ciphertext of the type-B file may be decrypted into a plaintext file. When the electronic device locks the screen again, the encryption key of the type-B file may be released. In other words, after the electronic device locks the screen, the system or the application cannot access the data encrypted in the second encryption manner.

Specifically, in response to the first trigger event, the encryption manner of the first data may be modified from the first encryption manner to the second encryption manner, or the encryption manner of the first data may be modified from the second encryption manner to the first encryption manner.

In an implementation, the electronic device includes second data whose encryption manner is different from the encryption manner of the first data, and the second data and the first data belong to a same directory.

For example, when the first data is a first file, and the second data is a second file, the first file and the second file belong to a same folder, and the folder belongs to an application of the electronic device.

In other words, according to the data protection method provided in this application, different encryption manners are set based on different data by using data as a granularity, and data belonging to a same directory may also have different encryption manners. Files are used as an example. Even if the first file and the second file belong to a same folder, the first file and the second file may have different encryption manners.

The following specifically describes how to modify the encryption manner of the first data when the first trigger event is different.

In an implementation, the data type of the first data is modified in response to the first trigger event, where the data type includes a first type on which encryption is performed in the first encryption manner and a second type on which encryption is performed in the second encryption manner.

For example, the first type is referred to as a type A, and the second type is referred to as a type B. File protection is used as an example. A data type may be understood as a file type, and the file type includes a type-A file and a type-B file.

Optionally, the first data includes first information, and the first information indicates a data type of the first data.

For example, the first information may represent a data type in a form of a field or a bit. For example, '00' indicates the first type, and '01' indicates the second type.

It may be understood that the data type is related to the encryption manner, and the electronic device may determine the encryption manner based on the data type. When the data type of the first data is the first type, the first data may be encrypted in the first encryption manner. When the data type of the first data is the second type, the second data may be encrypted in the second encryption manner.

It can be learned that the data type of the first data is modified in response to the first trigger event, so that the encryption manner of the first data can be modified.

Specifically, modifying the data type of the first data includes modifying the data type of the first data from the first type to the second type, and also includes modifying the data type of the first data from the second type to the first type.

For example, when the data type of the first data is modified to the first type, the encryption manner of the first data is modified to the first encryption manner. When the data type of the first data is modified to the second type, the encryption manner of the first data is modified to the second encryption manner.

Optionally, the data type of the first data is modified to the second type in response to no access to the first data within the first preset duration.

For example, the first preset duration may be preset by a system, set by a user, or determined through artificial intelligence learning. This is not limited in this application.

It should be noted that, if an original data type of the first data is the first type, the data type of the first data is modified to the second type in response to no access to the first data within the first preset duration; or when an original data type of the first data is the second type, the data type of the first data remains as the second type in response to no access to the first data within the first preset duration.

For example, if the electronic device does not process a service corresponding to the first data within the first preset duration (for example, two hours), it indicates that the electronic device temporarily does not need to access the first data, or if the electronic device completes execution of the service corresponding to the first data, the data type of the first data may be modified to the second type, to improve a protection degree of the first data.

Optionally, when the first data is not accessed within the first preset duration, the data type of the first data is modified to the second type in response to an unlocking operation.

It may be understood that modification of the data type may be triggered when the electronic device is unlocked.

Optionally, the data type of the first data is modified to the first type in response to a screen-locking operation and execution of a service corresponding to the first data by the electronic device.

It should be noted that, if the original data type of the first data is the second type, the data type of the first data is modified to the first type in response to the screen-locking operation and the execution of the service corresponding to the first data by the electronic device; or when the original data type of the first data is the first type, the data type of the first data remains as the first type in response to the screen-locking operation and the execution of the service corresponding to the first data by the electronic device.

For example, when the electronic device locks the screen, the electronic device still needs to process the service corresponding to the first data. It indicates that the electronic device needs to access the first data even when the electronic device locks the screen. In this case, the data type of the first data may be modified to the first type, so that the service corresponding to the first data is successfully executed.

For example, the service corresponding to the first data includes services such as data upload, data synchronization, and data update that are related to interaction between the electronic device and a cloud; further includes services such as data editing, data storage, and local data caching that are processed by the electronic device locally; and further includes services such as projection, audio and video playing, and call that are run in the background of the electronic device.

It should be noted that, in response to the first trigger event, when an encryption key of the first data exists, the data type of the first data is modified.

In other words, a prerequisite for the electronic device to change the data type of the first data is that in addition to the first trigger event, the electronic device further needs to determine that the encryption key of the first data exists.

For example, in response to no access to first data within the first preset duration by the electronic device, when the encryption key of the first data exists, the data type of the first data is modified to the second type. In response to the screen-locking operation and the execution of the service corresponding to the first data by the electronic device, when the encryption key of the first data exists, the data type of the first data is modified to the first type.

For example, if the original data type of the first data is the first type and an original encryption manner of the first data is the first encryption manner, the encryption key of the first data is the encryption key in the first encryption manner. In response to no access to first data within the first preset duration by the electronic device, when the encryption key in the first encryption manner exists, the data type of the first data is modified to the second type.

In an implementation, after the service corresponding to the first data is completed, the encryption key of the first data is released in response to the screen-locking operation and the execution of the service corresponding to the first data by the electronic device.

It should be noted that the electronic device may change an occasion for releasing the encryption key of the first data. When the electronic device further needs to execute the service corresponding to the first data after the electronic device locks the screen, the occasion for releasing the encryption key of the first data may be extended until the electronic device completes the service corresponding to the first data.

It may be understood that, after second preset duration after the electronic device locks the screen and completes the service corresponding to the first data, the encryption key of the first data may be released.

Optionally, the first data includes a batch file.

Optionally, the service corresponding to the first data includes data transmission, where the data transmission includes data update, data synchronization, and the like.

Optionally, the encryption manner corresponding to the first data is the second encryption manner.

For example, the service corresponding to the first data is a mobile phone cloning service. In response to the screen-locking operation and execution of the mobile phone cloning service by the electronic device, the electronic device may release the encryption key of the first data two hours after completing the mobile phone cloning service.

It can be learned that when the electronic device still needs to process the batch data when the screen is locked, the data type may not be changed, and the time for releasing the encryption key is temporarily adjusted, so that normal execution of the service is ensured while power consumption of the electronic device is reduced.

According to the data protection method provided in this application, different encryption manners may be set for data of different data types, and protection measures of different degrees are provided for different data. In addition, an encryption manner of same data may also be dynamically adjusted, to be applicable to different service processing scenarios, so that the electronic device can ensure normal data processing by the service while ensuring data security, thereby improving user experience.

An embodiment of this application provides a computer program product. When the computer program product runs on a device, the device is enabled to perform the technical solutions of the foregoing embodiments. An implementation principle and technical effect of the computer program product are similar to those in the foregoing method-related embodiments. Details are not described herein again.

An embodiment of this application provides a readable storage medium. The readable storage medium includes instructions. When the instructions are run on a device, the device is enabled to perform the technical solutions of the foregoing embodiment. An implementation principle and technical effect of the readable storage medium are similar. Details are not described herein again.

An embodiment of this application provides a chip. The chip is configured to execute instructions. When the chip runs, the technical solutions in the foregoing embodiment are performed. An implementation principle and technical effect of the chip are similar. Details are not described herein again.

A person of ordinary skill in the art may be aware that, in combination with units and algorithm steps of the examples described in embodiments disclosed in this specification, this application can be implemented by electronic hardware or a combination of computer software and electronic hardware. Whether the functions are implemented by using hardware or software depends on particular applications and design constraints of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing apparatus and units (modules), refer to a corresponding process in the foregoing method embodiments, and details are not described herein again.

In the several embodiments provided in this application, it should be understood that the disclosed device, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, in a mechanical form, or in another form.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of software functional unit and sold or used as an independent product, the functions may be stored in a computer-readable storage medium. Based on such an understanding, the technical solutions in embodiments of this application essentially, or the part contributing to the conventional technology, or some of the technical solutions may be implemented in a form of software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data protection method, wherein the method is applied to an electronic device, and the method comprises:
modifying an encryption manner of first data in response to a first trigger event, wherein the encryption manner comprises a first encryption manner and a second encryption manner, an encryption key in the first encryption manner continues to exist after the electronic device locks a screen, and an encryption key in the second encryption manner is released after the electronic device locks the screen.

2. The method according to claim 1, wherein the electronic device comprises second data whose encryption manner is different from the encryption manner of the first data, and the second data and the first data belong to a same directory.

3. The method according to claim 1 or 2, wherein modifying the encryption manner of the first data in response to the first trigger event comprises:
modifying a data type of the first data in response to the first trigger event, wherein the data type comprises a first type on which encryption is performed in the first encryption manner and a second type on which encryption is performed in the second encryption manner.

4. The method according to claim 3, wherein modifying the data type of the first data in response to the first trigger event comprises:
modifying the data type of the first data to the second type in response to no access to the first data within first preset duration.

5. The method according to claim 3, wherein modifying the data type of the first data in response to the first trigger event comprises:
modifying the data type of the first data to the first type in response to a screen-locking operation and execution of a service corresponding to the first data by the electronic device.

6. The method according to claim 4 or 5, wherein modifying the data type of the first data in response to the first trigger event comprises:
when an encryption key of the first data exists, modifying the data type of the first data in response to the first trigger event.

7. The method according to any one of claims 1 to 6, wherein modifying the encryption manner of the first data in response to the first trigger event comprises:
after completing the service corresponding to the first data, releasing the encryption key of the first data in response to the screen-locking operation and the execution of the service corresponding to the first data by the electronic device.

8. The method according to claim 7, wherein the first data comprises a bulk file.

9. The method according to claim 7 or 8, wherein the service corresponding to the first data comprises data transmission.

10. The method according to any one of claims 7 to 9, wherein the encryption manner of the first data is the second encryption manner.

11. The method according to any one of claims 1 to 10, wherein the first data comprises first information, the first information indicates the data type of the first data, and the data type comprises the first type on which encryption is performed in the first encryption manner and the second type on which encryption is performed in the second encryption manner.

12. The method according to any one of claims 1 to 11, wherein the encryption key in the second encryption manner is related to an identifier of an application, and the application comprises the first data.

13. An electronic device, comprising:
one or more processors; and
one or more memories, wherein
the one or more memories store one or more computer programs, the one or more computer programs comprise instructions, and when the instructions are executed by the one or more processors, the electronic device is enabled to perform the method according to any one of claims 1 to 12.

14. A data protection apparatus, comprising a processor coupled to a memory, wherein the memory is configured to store a computer program, and the processor is configured to run the computer program, to enable the data protection apparatus to perform the method according to any one of claims 1 to 12.

15. The data protection apparatus according to claim 14, further comprising one or both of the memory and a transceiver, wherein the transceiver is configured to receive a signal and/or send a signal.

16. A computer-readable storage medium, wherein the computer-readable storage medium stores a computer program, and when the computer program is executed by a computer, the computer is enabled to perform the method according to any one of claims 1 to 12.

17. A computer program product comprising instructions, wherein when the computer program product runs on a computer, the computer is enabled to perform the method according to any one of claims 1 to 12.

18. A chip, wherein the chip comprises a processor and a data interface, and the processor reads, through the data interface, instructions stored in a memory, to perform the method according to any one of claims 1 to 12.
